# EUROPEAN PATENT SPECIFICATION

(11) **EP 3 939 940 B1**
(45) Date of publication and mention of the grant of the patent: **10.09.2025**
(21) Application number: 20186019.4
(22) Date of filing: 15.07.2020
(51) Int. Cl.: C02F 1/461, C02F 1/467, C02F 101/32, C02F 101/36, C02F 103/00

(54) **ARRANGEMENT COMPRISING AN ELECTROLYTIC CELL**
ANORDNUNG MIT EINER ELEKTROLYSEZELLE
AGENCEMENT COMPRENANT UNE CELLULE ÉLECTROLYTIQUE

(43) Date of publication of application: 19.01.2022
(73) Proprietor: Eckelberry, Nicholas, Los Angeles, CA 90028 (US)
(72) Inventor: Eckelberry, Nicholas, Los Angeles, CA 90028 (US); Green, Michael, Pleasant Hill, California 94523 (US)
(74) Representative: Eisenführ Speiser

(56) References cited:
- WO-A1-2005/058761
- WO-A1-2009/143629
- GB-A- 2 515 324

## Description

### Arrangement

The invention relates to an arrangement comprising an electrolytic cell. The invention further relates to a process of treating bodies of water having a certain level of total dissolved solids (TDS). The invention also relates to the use of the arrangement for treatment of the water bodies in different applications.

### Background of the invention

The problem of eutrophication and anoxia in freshwater lakes is well-known. Eutrophication often results in toxic algae blooms as a consequence of excess amounts of nutrients present in lakes, such as nitrates or phosphates originating from fertilizer runoffs or remaining quantities thereof in effluents from waste water, entering the aquatic system and causing the excessive growth of algae. An algal bloom will affect the whole ecosystem.

In aquariums, fish farming waters as well as in waste waters from inter alia animal farms such as hatcheries, formation of animal waste creates anoxic conditions by releasing ammonia via urea which in turn lowers the dissolved oxygen content.

Current methods resolving these problems involve increasing the level of dissolved oxygen by means of fountains, bubblers and direct O₂ injection. In wastewater treatment, current solutions to high BOD (Biochemical Oxygen Demand) using aerobic and anaerobic microbial treatment is both energy and time consuming. With respect to lakes, there are currently no practical solutions of increasing the level of dissolved oxygen or eliminating alga blooms.

US3752747 teaches electrolysis utilizing donating metal anodes inhibiting the growth of alga pollution in lakes or other water bodies. The active donating metal anode releases metal ions toxic to algae. A detector electrode is used to sense the toxic ion concentration so that a predetermined concentration lethal to algae is maintained but low enough to be harmless to human and fish life. This process is negative for the lake in many ways including toxic long-term effects caused by released metal ions originating from e.g. aluminum or copper-based anodes.

WO2005058761 discloses the use of electrolytic cells for decontamination of ocean water containing bacteria, which is critical in for example ballast water remediation. This process is not addressing selective generation of oxygen species such as ozone (O₃) peroxides (H₂O₂) or even singlets (O) but simply acknowledges the self-ionization of water which produces hydroxyl ions (OH⁻) and manifestly the generation of chlorine as the main disinfectant. WO2005058761 is further silent on treatment of eutrophic bodies of water such as freshwater lakes.

Further examples are given in WO 2009/143629 A1 and GB 2 515 324 A.

An object of the present invention is to provide an arrangement comprising an electrolytic cell which generates dissolved oxygen in bodies of water, in particular fresh water such as fresh water lakes. A further object of the invention is to remediate bodies of water having a high BOD or suffering from anoxic or eutrophic conditions in waters. A further object of the invention is to provide a process of decomposing hydrocarbons such as polyaromatic hydrocarbons present in an aqueous phase. A further object of the invention is to provide a process of providing disinfected potable municipal drinking water.

### The invention

The present invention relates to an arrangement comprising an electrolytic cell configured to produce oxygen according to claim 1.

According to one embodiment, the distance between said at least one anode and said at least one cathode is from 3 mm to 50 mm such as from 3 mm to 25 mm, or more preferably from 3 mm to 10 mm.

According to one embodiment, the arrangement further comprises at least one sensor configured to measure the oxygen saturation (% O₂) in the vicinity of said at least one electrode pair.

According to one embodiment, the arrangement is configured to measure the oxygen saturation (% O₂) at a distance from 1 to 26 cm, preferably from 1 to 5 cm from said at least one electrode pair, preferably by means of a Dissolved Oxygen meter.

According to one embodiment, said at least one cathode is a non-coated titanium substrate. According to one embodiment, the arrangement comprises a housing enclosing the electrolytic cell, said housing having at least one inlet and at least one outlet for water. According to one embodiment, said at least one anode and said at least one cathode are concentrically shaped. According to one embodiment, the electrolytic cell is configured to be operated at a current density ranging from 50 to 400 mA/cm², preferably from 50 to 200 mA/cm², most preferably from 100 to 200 mA/cm².

The invention also relates to a process for treating a body of water according to claim 9, wherein the body of water before treatment has a total dissolved solids (TDS) content ranging from 100 to 30 000 ppm or a conductivity ranging from 5.5 µS/m to 5 S/m.

According to one embodiment, a voltage ranging from 1.5 to 50 V is applied over the electrolytic cell.

According to one embodiment, the body of water before starting the process contains hydrocarbons selected from polyaromatic hydrocarbons or hydrocarbons present in or originating from fuel oils in an amount ranging from 1 µg/L to 100 mg/L water.

According to one embodiment, the body of water before starting the process contains per- and polyfluoroalkyl substances (PFAS) in an amount ranging from 1 µg/L to 100 mg/L water.

According to one embodiment, sodium chloride is added to the process in an amount of 10 to 100 kg/m³ water for generation of chlorine or chlorine species for municipal drinking water.

The invention also relates to the use of an arrangement according to claim 15 for treating a body of water having a TDS (total dissolved solids) content ranging from 100 to 30 000 ppm, in particular ranging from 100 to 1000 ppm.

According to one embodiment, the arrangement is used in bodies of water such as fresh waters including freshwater lakes, aquacultures, aquariums, swimming pools, fisheries, fish farming, disposal ponds, wells, wastewater from hatcheries, and cooling towers.

In a further embodiment, the arrangement is used in land-based wastewater systems for decomposing per- and polyfluorinated alkyl substances (PFAS). PFAS is a broad class of around 5,000 different synthetic chemicals named per- and polyfluorinated alkyl substances (also called "forever chemicals") which include fluorosurfactants such as PFOS (perfluorooctanesulfonic acid), perfluorononanoic acid (PFNA) and PFOA (perfluorooctanoic acid) that various industries have used widely since the 1940s and are now found with increasing prevalence in fresh wastewater streams. In a further embodiment, the invention is used for decomposing polyaromatic hydrocarbons (PAH) in saline wastewater specifically generated by the ship's wet scrubber systems stream.

By the term "saline" is meant water having a total dissolved solids (TDS) content ranging from 5000 ppm to 30 000 ppm as measured by a TDS (Total dissolved Solids) meter or having a conductivity ranging from 3 to 6 S/m such as 4 to 5 S/m measured by connecting the electrolyte in a Wheatstone bridge as found in standard TDS meters such as a Hatch HQd.

By the term "fresh water" is meant water having a total dissolved solids (TDS) content ranging from 100 ppm to 1000 ppm or having a conductivity ranging from 1 µS/m to 50 mS/m, such as 5 mS/m to 50 mS/m.

It has been discovered that by means of the instant invention, it is possible to operate an electrolytic cell having an inconsiderable conductivity as low as 1 µS/m at 25 °C, or a total dissolved solids (TDS) content as low as 120 ppm arising from minute electrolyte levels of for example phosphate, nitrates, traces of metals such as potassium, and iron as well as chloride ions. The negative charge of eukaryotes and prokaryote may likewise contribute to an increased conductivity.

The following anode and cathode reactions would be likely to occur within an electrode pair:

### Anode Reactions

a) 2Cl⁻= Cl₂ + 2e⁻
b) H₂O = 1/2O₂ + 2H⁺ + 2e⁻
c) 2H₂O = 2HO₂ + 2H⁺ + 2e⁻
d) 3H₂O = O₃ + 6H⁺ + 6e⁻

### Cathode reactions

a) 2H⁺ + 2e = H₂
b) 2H₂O + 2e⁻= H₂ + 20H⁻
c) H₂O+O₂+2e⁻= HO₂⁻+OH⁻
d) Cl₂ + 2e = 2Cl⁻

The following possible chemical reactions may occur between anode and cathode products formed from inter alia the above listed reaction formulae in between the anodes and cathodes of an electrode pair:
a) Cl₂ + 2OH⁻ = ClO⁻+ Cl⁻+ H₂O
b) Cl₂ + HO²⁻= HCl + Cl⁻+ O₂
c) 3ClO⁻= ClO₃⁻+ 2Cl⁻
d) H⁺+ HO²⁻= H₂O₂

According to one embodiment, the electrolytic cell is open, i.e. does not have a separator between the anode and cathode forming an electrode pair. Thus, preferably the cell operates in the absence of a separator such as a diaphragm or a membrane. The presence of any such separator may result in a considerable pressure drop since the throughput of the water body then is reduced in a continuous or semi-continuous process, but also due to the fact that such a separator means may inhibit the desired reactions between the reaction products at the anode and the cathode from occurring.

The reaction products from the anode reactions may thus be instantly mixed with the reaction products of the cathode which may react further at the cathode. Reaction products formed may function as effective disinfectants which in turn may reduce COD and BOD.

According to one embodiment, any subsequent electrode pair in addition to said at least one electrode pair is arranged substantially in parallel with a first electrode pair.

According to one embodiment, the distance between the anode and the cathode is smaller than the distance to any other possible electrode pair or optional single electrode in the cell.

According to one embodiment, the distance between adjacent electrode pairs is from about 1 to 25, for example 1 to about 25, or from about 1 to about 10 times or 1 to about 2 times the distance between the anode and the cathode in said at least one electrode pair. According to one embodiment, the distance between adjacent electrode pairs can be substantially the same. Preferably, the relative distance between electrodes should be as small as possible to lower the voltage required to perform the desired reactions on the electrodes.

Preferably, the anode and cathode are positioned substantially in parallel. The angle between the anode and the cathode in said at least one electrode pair is thus not necessarily 0° as would be the case **if** they were arranged in parallel. Preferably, the angle between the anode and the cathode is from about 0 to about 20°, and most preferably from about 0 to about 10° or 0 to about 1°.

According to one embodiment, the electrodes comprise an electrode substrate with apertures such as a mesh, e. g. an expanded metal mesh; a wire cloth, perforated plates or sheet metals, sintered metal fibers, sintered metal powder, or any other perforated configuration. The apertures may have any suitable shape, but preferably the apertures have the shape of a rhomb, square, rectangle, trapezium, circle or the like. The dimensions (e. g. the sides of a rhomb) of the apertures suitably range from about 0.5 to about 50, preferably from about 0.5 to about 15 or 0.5 to 5 mm. Each aperture preferably has an area from about 0.01 to about 2500, more preferably from about 0.2 to about 500, and most preferably from about 1 to about 100 mm². The electrode mesh structure will provide for low pressure drop in case of, for example, a body of water flowing substantially orthogonally through said at least one electrode pair.

The electrodes have a substantially planar shape, in the form of mesh structure. According to one embodiment, the electrodes have a substantially concentric shape. For example, a cathode and an anode forming a concentric electrode pair, may be so arranged the cathode has a greater diameter than the anode. Not according to the invention, the cathode has a greater diameter enveloping the anode or vice versa.

Preferably, the cathode comprises a cathode substrate comprising niobium, nickel, titanium, conductive nonmetallic material such as graphite, e.g. graphite fibers, a graphitized cloth, a conductive metal oxide, p-doped silicon, or mixtures thereof, preferably titanium. According to one embodiment, the cathode is coated with a suitable coating which may enable a more energy-efficient generation of hydrogen gas.

Preferably, the anode substrate is fabricated of titanium, niobium or other suitable metal, or a conductive nonmetallic material such as p-doped silicon, or mixture thereof, preferably titanium.

Preferably, the anode coating comprises both iridium oxide (IrO₂) and ruthenium oxide (RuO₂). Preferably, the anode coating further comprises PtO₂ and/or PdO.

Preferably, the anode coating comprises from 60 to 90 wt% ruthenium oxide (RuO₂), for example from 70 to 85 wt% ruthenium oxide (RuO₂). Preferably, the anode coating comprises from 10 to 40 wt% iridium oxide (IrO₃), for example 15 to 30 wt% iridium oxide (IrO₂).

Preferably, the thickness of the respective electrodes is from about 0.2 to about 3 mm, more preferably from about 0.2 to about 2 mm, and most preferably from about 0.2 to about 1.5 mm.

Preferably, the specific surface area of the anode and the cathode is from about 1 to about 1000, most preferably from about 10 to about 1000 m²/m² projected surface area.

The cathode suitably has a high hydrogen formation overvoltage, preferably higher than about 300, or higher than 400, and most preferably higher than about 500 mV. Preferably, the anode has a high oxygen formation overvoltage, preferably higher than about 400 mV, and most preferably higher than about 700 mV.

According to one embodiment, the electrodes are not scratched, embossed, patterned or otherwise roughened to increase the local turbulence near the electrode pairs.

The number of electrode pairs will depend on whether the arrangement is operated in still or flowing water and in the latter case the flow rate. However, the cell preferably comprises from about 2 to about 50 more preferably from about 10 to about 50, and most preferably from about 25 to about 50 electrode pairs. According to one embodiment, the cell comprises from about 2 to 10 electrode pairs, for example 2 to 5 pairs or just 2 pairs. Other factors such as total dissolved solids (TDS) content, BOD level, amount of algae, dissolved oxygen, type and volume of body of water etc. will also affect suitable design of the arrangement.

According to one embodiment, said at least one electrode pair is mounted in a suitable housing in which the electrodes are arranged.

The dimensions of the arrangement, the electrodes and the cell can be designed as appropriate for the respective applications.

The arrangement which may comprise a housing enclosing the electrolytic cell is preferably fabricated of a material withstanding an aggressive environment such as titanium, ceramics, hard plastics such as ABS (acrylonitrile butadiene styrene) which can be computer printed to attain a suitable design.

According to one embodiment, the arrangement includes a top flange and a bottom flange, wherein the top flange is incorporated into the top of the arrangement and the bottom flange is incorporated into the bottom of the arrangement. Preferably, the top flange connects with the top end of the housing and the bottom flange connects with the bottom end of the housing. For example, the flanges extend radially outward from the perimeter of the housing enclosing the electrolytic cell and can be used to interface with the top and bottom endcaps to attach the top and bottom endcaps to the arrangement.

According to one embodiment, the top flange and the bottom flange provide mounting for the top endcap and the bottom endcap, which are used to seal the housing and its internal components. The top endcap and the bottom endcap receive and retain in place a series of electrode connectors. Preferably, the series of electrode connectors retains the electrode pair or pairs within the arrangement. Also, the top endcap and the bottom endcap can serve as electrical isolators between the housing and the internal stack of electrodes. Therefore, the top endcap and/or the bottom endcap can be made of an insulative material. In one embodiment, the top endcap and/or bottom endcap are made of acrylonitrile butadiene styrene (ABS) or polyvinyl chloride (PVC).

According to one embodiment, the top endcap and/or the bottom endcap includes one or more passageways, for example, one or more holes, for securing an electrical connection to each of the electrodes.

According to one embodiment, the electrode connection point extends beyond the outer surface area of the endcaps with these points used for electrical connection to a DC power source.

According to one embodiment, the electrolytic cell comprises means for imposing a voltage across said anode and cathode and means for supplying a direct current to said cell.

Preferably, the means of supplying a direct current is a conventional rectifier.

According to one embodiment, the endcaps include inlets and outlets. The inlet(s) and the outlet(s) can alternatively or additionally be included through the housing.

According to one embodiment, the arrangement further comprises one or more gaskets between the top flange or the top end cap and one or more gaskets between the bottom flange or bottom end cap.

Not according to the invention, , each of the electrodes in the stack of electrodes is essentially cylindrical. According to one embodiment, each of the electrodes in the stack of electrodes are substantially oval, star-shaped, or square-shaped.

According to one embodiment, the bottom endcap and/or the top endcap include a secondary outlet coupled to a pressure relief valve for alleviating pressure build up in the arrangement. The pressure relief valve may optionally be in communication with a carbon filter for noxious or toxic gas capture.

According to one preferred embodiment, the arrangement comprises an enclosing structure such as a piping system enclosing the electrolytic cell comprising said at least one electrode pair or a stack of electrode pairs and an inlet and an outlet through which the water to be treated is passed.

According to one embodiment, in the case of a continuous or semi-continuous process, the volumetric flow through the electrolytic cell being enclosed in a housing is from about 1 to about 750, for example from about 5 to about 500, such as from about 10 to about 500 m³/h. According to one embodiment, the linear flow rate through the electrolytic cell is from about 0.1 to about 10, such as from about 0.2 to about 8, or from about 0.2 to about 5 m/s.

In some embodiments where a semi-continuous or continuous process is operated, preferably, the linear flow rate of the water stream entering the arrangement is set so high that turbulence is easily achieved when reaching the first electrode. An increased turbulence results in increased mass transfer which in turn yields a more efficient treatment. Preferably, the Reynold's number in the cell is higher than about 2000, and most preferably higher than about 5000. However, Reynold's number is preferably lower than about 100000.

When operating the cell as a semi-continuous or continuous process wherein the electrolytic cell is arranged in an enclosed container, the water body may be passed in single loop or pass through the cell once or recirculated one or several times. Even though a single pass operation is preferred, it may at times be needed to recirculate the flow through the cell to electrolyze a predetermined amount of dissolved oxygen.

According to one embodiment, at least one spacer is arranged in between anode and cathode of an electrode pair, preferably in order to ensure a distance there between ranging from 3 mm to 100 mm such as from 3 mm to 50 mm, e.g. from 3 to 25 mm to safeguard the anode and cathode are not in contact with each other. Preferably, the shape of the spacers is of any suitable shape which may be provided e.g. by means of 3D-printing. Additional spacers may be used between adjacent electrode pairs in order to ensure a constant gap therebetween over time.

The arrangement including the electrolytic cell may be operated in continuous process, semi-continuous, or batchwise mode. The cell may for example operate as a stationary unit arranged in a freshwater lake or in an aquarium. In any of these operations, the fluid transit time or time of operation of the cell may be varied to allow sufficient generation of oxygen.

According to one embodiment, the voltage applied over the cell ranges from 2 Volts to 14 Volts or for example from 6 Volt to 12 Volt, and most preferably from 7 to 11 Volts.

According to one embodiment, the wattage during operation of the arrangement ranges from 20 to 200 Watts, for example from 20 to 100 Watts or 30 to 50 Watts.

According to one embodiment, the retention time in an enclosed arrangement wherein the electrolytic cell ranges from 1 to 2 minutes. In arrangements using a so called open architecture such as an arrangement for lake aeration, the process is continuous, and the units can be positioned for whole seasons of dissolved oxygen (DO) delivery within the lakes. This is important for anoxic lake remediation which could take years.

The retention time in an enclosed arrangement or process time in an open arrangement may be optimized depending on the initial levels of BOD, dissolved oxygen etc. As the levels of these parameters are continuously monitored, the energy consumed may be minimized since the process may be controlled to terminate when any relevant parameter reaches a target value, for example when the level of dissolved oxygen is sufficiently high and the body of water is considered to be sufficiently remedied.

According to one embodiment, no chloride such as sodium chloride is added to freshwater, such as freshwater lakes and natural environments such as hatcheries or aquariums in which the cell is operated. This is to mitigate the generation of chlorine and chlorine compounds which otherwise may be generated at the anode in undesired quantities and possibly reacted further at the cathode, in particular chlorine compounds contained in polyaromatic hydrocarbons, chloroform (CHCl₃), dichlorobromomethane (CHCl₂Br), chlorodibromomethane (CHClBr₂), and bromoform (CHBr₃) or a class of chemicals known as disinfection by products (DBP) all known carcinogens.

According to one embodiment, the arrangement is used as a chlorine generator to produce chlorine gas (Cl₂) or dissolved species derived therefrom such as hypochlorous acid (HClO), sodium hypochlorite (NaClO) providing for inexpensive in-situ chlorine production. This embodiment may be used if the electrolyte contains brine, typically sodium chloride.

According to one embodiment, in order to provide municipal drinking water, from about 1 to 4, preferably from 2 to 3 kg sodium chloride /m³ of water is added to the body of water for generation of chlorine and other disinfecting chlorine species using the arrangement.

According to one preferred embodiment, no electrolyte is added to the body of water.

According to one embodiment, inline electrodes, preferably with a porous structure, form a stack electrode pairs, in particular the center of the stack, in line within the flow so as to bring all of the polluted water in contact with the electrodes which are designed as mesh screens.

Preferably, the electrodes have a top flange and a bottom flange. Preferably, a top end cap covers the top flange and a bottom end cap cover the bottom flange.

Preferably, an inlet is provided through the bottom end cap and through the bottom flange that is in fluid communication with the inline electrodes.

Preferably, an outlet is provided through the top end cap and through the top flange that is in fluid communication with the inline electrodes.

According to one embodiment, the housing, which may be made of titanium, for the stack of planar or concentric electrodes serves as a first electrode.

According to one embodiment, the housing is in the shape of a box or concentric tube having a top end and a bottom end enclosing the stack of electrode pairs in the form of planar plates with mesh structure. The stack of electrodes is preferably constructed in a progression of varying smaller concentric-shaped electrode sizes (smaller), with the housing having the largest diameter. This configuration would be the preferred embodiment for lake aeration, where a continuous generation of bubbles of H₂ and O₂ decontaminate and flocculate algae out of solution while raising the oxygen saturation.

According to one embodiment, the arrangement can be used at the bottom of a tank or in aquariums or fisheries to raise the level of dissolved oxygen without having to resort to conventional injection of oxygen.

According to one embodiment, the arrangement of the invention comprising electrode pairs in the form of plates immersed in the water from a boat or skiff may be used to decontaminate a lake of mosquito larvae as the electrode pairs skim the surface.

According to one embodiment, the arrangement is positioned at the bottom of a water body, preferably at adjustable legs or lowered from a barge or other floating pontoon under an alga bloom for disinfection and remediation.

According to one embodiment, a stack of electrode pairs, comprising for example planar electrode plates, is used in cooling or water towers for continuous decontamination and provision of an increased level of dissolved oxygen.

According to one embodiment, a stack of electrode pairs is used to treat agriculture water. This may be made by providing electrode pairs molded into a small unit that fits on the end of a hose for application on a field thus delivering water lowering the use of pesticides as the water treated has already destructed potential pathogens through contact with the reactive oxygen species and hydrogen compounds or hydroxyl ions produced by the stack (array) of electrodes.

According to one embodiment, the arrangement is used at the bottom of a bath or pool to generate oxygen and hydrogen gas.

According to one embodiment, the arrangement is anchored or hung at the bottom of a fresh body of water, for example from a vessel, or placed in the middle of a tank, aquarium or other container.

### Brief Description of the drawings

Figure 1 illustrates a perspective view and the configuration of the electrolytic cell and its interior and exterior components enclosed in the arrangement.
Figure 2 illustrates a single plate and stacked plates which can be used for aeration within a body of water.
Figure 3 illustrates a Total Nitrogen removal system for reducing the BOD.
Figure 4 shows two mesh screens representing anode and cathode arranged within a frame.

### Detailed description of the drawings

Described herein are arrangements and methods for the production of reactive oxygen species and to some extent in some embodiments chlorine compounds utilizing a stack of electrode pairs enclosed in a housing adaptable to simultaneously carry out a series of functions.

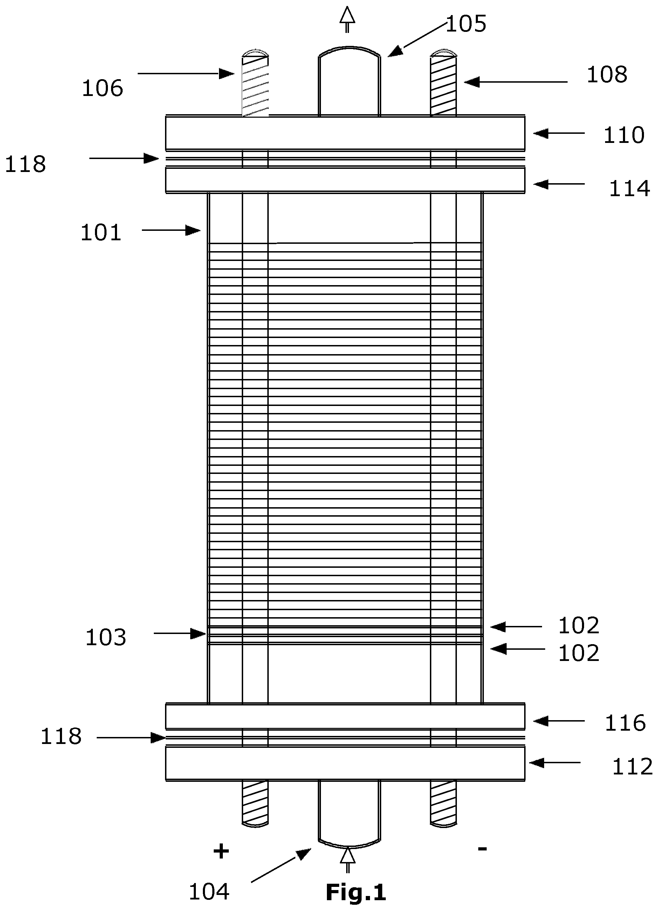

Figure 1 shows an electrolytic reactor consisting of a box or a concentric or tubular housing 101 constructed of an electrically conductive material with housing 101 serving as a first uncoated anode, for example an uncoated electrically conductive and corrosion resistant titanium anode.

The dimensions of housing 101 is scalable and can be constructed in various sizes, diameters and lengths. Housing 101 can be positioned to work in series or in parallel with other housings depending on flow rate, type of water body etc.

According to one embodiment, the electrolytic cell arranged inside the housing comprises at least two opposing flanges on the surface of the housing 101, a first flange being a top flange 114, a second flange being a bottom flange 116 which are attached to the housing by means of welding, attachment by threads or similar means for attachment.

According to one embodiment, the first and second flanges 114, 116 incorporate a series of mounting holes which are utilized by a series of fasteners which are used to secure endcaps 110 and 112 to the housing 101. Electrical connections 106 and 108 are connected to each electrode with the connectors extending through housing 101.

Placed between each flange 114, 116 and endcaps mating surface are gaskets 118 used to provide a watertight seal between adjoining surfaces on flanges 114 and 116 and endcaps 110 and 112 when bolted tightly together. The material used for gaskets 118 preferably is chemically and thermally resistant such as for example neoprene rubber.

Both endcaps 110 and 112 act as isolators and therefore, are required to be constructed of a nonconductive material such as ABS or PVC or the endcaps can be constructed of any type of nonconductive materials.

Both endcaps provide an opening for the acceptance and discharge of an influent, inlet 104 allows influent entry while outlet 105 allows the discharge of influent from the housing 101. The inlet and outlet size may be designed in accordance with the flow rate. For example, if the stack of electrodes 102 (cathode) and 103 (anode) allows a high flow rate, mesh sizes (mesh size should be based on the contaminate types in the water being treated), then the inlet and outlet could be of larger size. However, in applications where the inlet and outlet diameter size are larger due to overall scale of the system in order to meet a high flow rate, then the inlet and outlet opening sizes can be increased.

The gap spacing between each electrode pair, cathode 102 and anode 103, can range in size as an example from 3 mm to 5 cm.

In a case study for a shipping company scrubber water (Stena), the reactor was run and showed a 95 wt% decrease in polyaromatic hydrocarbons (PAH) and "forever Chemicals" like PFOS and PFOA (perfluorooctanesulfonic acid and perfluorooctanoic acid) as well as substantial reduction or elimination of NO₂⁻, H₂S and SO₄²⁻. The dissolved oxygen level increased 6 ppm with a 700 mV ORP as measured by an Aqua^{®}TROLL 600 meter, ensuring acceptable discharge requirements of the treated scrubber water from Stena shipping and ferry lines Sweden.

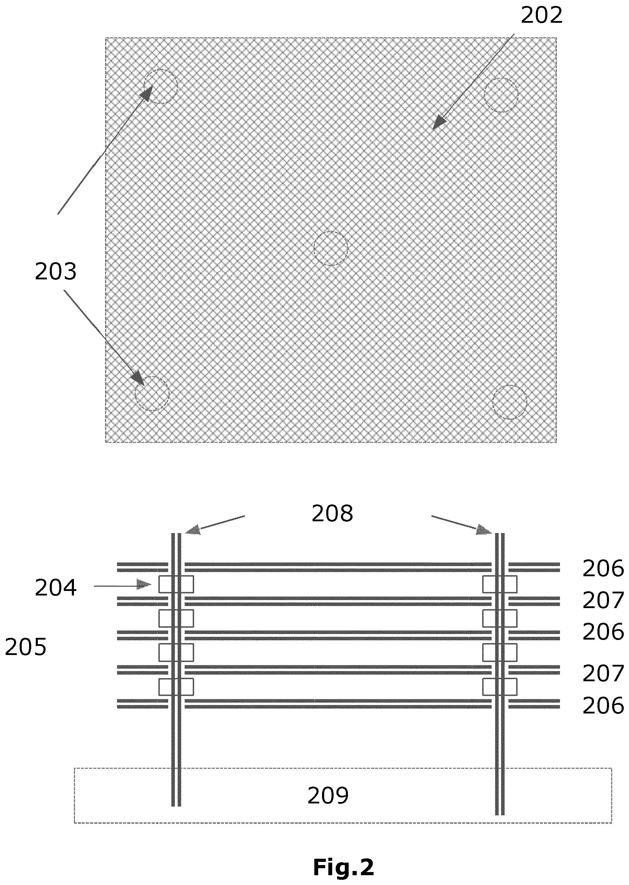

Figure 2 shows a schematic view of stacked plates with computer printed spacers 204 between anode 206 (titanium substrate coated with ruthenium oxide and iridium oxide) and cathode 207 (non-coated titanium substrate) matching the exact tolerances required for minimum distance between plates. Opening 203 in the mesh plates 202 may be used to align and arrange the electrodes in parallel in an arrangement 205. This electrolytic cell can be used without a reactor tube and placed directly in water at low enough amperage such as 1-20 amperes, voltage of about 4 volts and wattage of 5-80 Watts so as to effectively deliver oxygen species at the desired amount.

The plates 202 are mesh plates as described in great detail in Figure 1. The configuration without a housing enclosing the cell, i.e. with an open architecture 208 of the plates, allows the formed reacting products to exude from the stack rather than being confined and directed as a flow in a reaction chamber. The architecture may be positioned on a platform or support 209 at a predetermined distance from the bottom of the body of water to be treated.

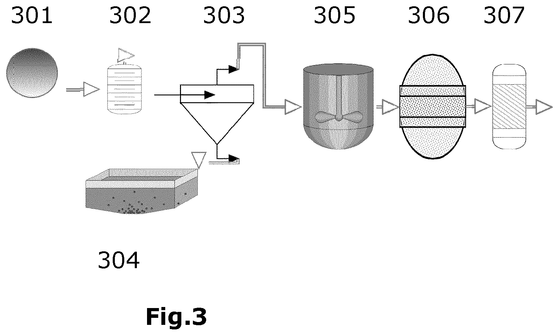

Figure 3: This flow chart shows the steps required to lower Total Nitrogen from an aqueous solution. This system highlights the use of aeration modules and reactor modules in series to lower biochemical elements in water. The system comprises an inflow water 301 which has high content of NH₃ that is then pH modified to a lower pH 302 to ionize NH₃ to NH₄⁺, with organic nitrogen particles 303 and reclaimed by filter 304. The NH₄⁺ rich product is first aerated 305 for a period of between 1 minute and 10 minutes where the dissolved oxygen (DO) is increased substantially thus lowering the N-BOD. The product is then processed through a closed reactor system 306 which intensively brings the water into contact with a plate stack (array) composed of between 20 and 50 pairs of anodes and cathodes. The product can then be filtered 307 by media, such as activated carbon or sand for final polish.

In a case study, Reverse Osmosis Reject water was processed to eliminate Total Nitrogen of 26 ppm to 0 ppm in 8 minutes with a TDS of 130 ppm or approximately 1.02 µS/cm as measured by Hatch multi-meter HQ40d and TKN levels certified by Campbell laboratories in California.

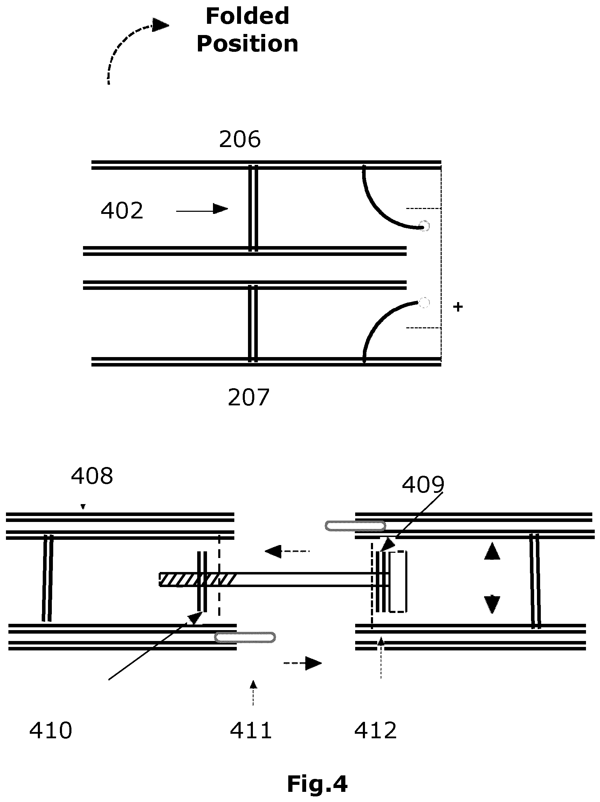

Figure 4 shows two mesh screens representing anode and cathode arranged within a frame 402 3-10 mm apart. The frame has an interlocking mechanism such as a hooked hinge 411, cam lock 408 or other interlocking method 409 which fits into a counterpart interlock 410 on the counterpart frame 412. Mechanisms for interlocking the frames with conductive hinges can vary greatly, but the general concept is that the frames can be connected with hinges that are negative and positive to conduct electricity to the next frame thus making a patchwork or quilt of interdependently electrified frames electrically connected to the anode and cathode respectively.

The dimensions of the frame may be for example 1 meter by 1 meter and 2-5 cm wide which is connected to another frame and interlocked etc. to a desired number of frames, e.g. up to 10 frames. These frames then have a total area of 10 m² and may be hoisted downwards into a lake at a position of 1 meter from the bottom of a lake.

The frames may be cabled from a fixed platform, barge, pontoon or boat which houses several solar panels and the array(s) are hoisted down into critical polluted areas, such as algae blooms. The barge coat or pontoon can be moved around the lake or anchored for a desired period of time.

In another embodiment, the array of frames is anchored at the bottom of the lake with a fixed leg system and weighted down to prevent flotation or disruption. An electrical conduit is run to a central distribution point and electricity is disbursed throughout the array (stack) of electrodes or in some cases, a multitude of electrical conduits are supplied to multiple contact points in parallel.

In a further embodiment, the frames can be placed vertically within a sluice or release canal to treat for example waste waters. In this case, the frames may have a plurality of anode/cathode mesh plates stacked within near proximity to decontaminate flowing water.

### Example 1

In this example an aeration unit comprising two electrode pairs (anodes 206 and cathodes 207 as set out in example 2) or 4 plates configured as per figure 2 attached to a DC power supply in a tank containing actual lake water producing hydrogen and oxygen in a 2:1 weight ratio by electrocatalytic dissociation of water, was used to passively aerate a sample of lake water in a 200 liter tank (which likewise could be used to aerate an aquarium and any body of water requiring an increase in oxygen saturation). Our testing showed an increase from 8 ppm to 12 ppm or 4 ppm dissolved O₂ as measured with the Aqua TROLL^{®} 600 in the lake water within 3 minutes with a current of 5 volts and 30 amperes or 150 watts delivered by Velleman DC power supply . While oxygen was formed at the anode, hydrogen was generated at the cathode which contributes to the destruction of bacteria and flocculation of algae material by attracting the positive charge of eukaryote cell. Concurrently, it was observed that the algae in solution flocculated out to the top of tank buoyed by the bubbles generated by the aeration unit at a current density of 15 A/m² with 4 volts and 30 amperes. Algae could then be collected with a paddle and observed cells coated with hydrogen and oxygen bubbles.

### Example 2

On a recent test in a fish hatchery, we placed an array as described in figure 1, of 40 pairs of configured plates with anodes 206 (iridium oxide/ruthenium oxide coated titanium substrate) and cathodes 207 (titanium substrate) attached to a power supply to determine the efficacy of the device in treating hatchery wastewater for dissolved oxygen (DO) enhancement thus BOD reductions as the Omega hatchery does not permit its system to exceed a harmful (3PPM) level of NH₄. The levels of NH₄ as measured by TKN Test ALS Scandinavia laboratories Stockholm was before: <0.5 ppm and after: <0.5ppm.
Instrument Properties
Device Model = Aqua TROLL 600
Device SN = 605064

| | Date Time | Dissolved | RDO | pH | pH | ORP | Turbidity | Conductivity | Total |
|---|---|---|---|---|---|---|---|---|---|
| | 7/3/2020 | Oxygen | Saturation | | mV | (mV) | (NTU) | (µS/cm) | Dissolved |
| | | Concentration (mg/L) | % | | | | | | Solids (PPM) |
| Prior | 12:24: | 12.43 | 111.36 | 8.59 | (89.41) | 229.05 | 31.94 | 103.33 | 9.5 |
| After | 12:26:P | 15.04 | 134.71 | 8.14 | (64.47) | (145.4) | 20.75 | 94.92 | 8.7 |

### Example 3

In testing for scrubber water remediation, a M³ tote of actual scrubber water was obtained from shipping/ferry company Stena. Primary readings were taken before the process, which consisted of flowing the polluted water through 4 sets of reactors with 40 plates each as described in figure 1 encapsulated within an ABS housing and the water flowed through the reactor system by use of a displacement pump at a flow rate of roughly 80 liters/ minute outflow with a DC voltage power supply supplying in parallel a total 200 amperes at 12 volts or 50 amperes per reactor. Flowing the water as such through the reactors increases contact time for polluted water to come into contact with the plates and its produced gases for BOD and COD decomposition. The second readings were taken from the outflow of the reactor series and samples were also drawn and hand carried to ALS Scandinavia laboratories Stockholm, respecting chain of custody of the aliquot.

### Device Model = Aqua TROLL 600

| Date Time | RDO mgl | RDO (%Sat) | Oxygen (Torr) | pH | pH mV | ORP (mV) | Turbidity (NTU) | Conductivity (ÂµS/cm) | |
|---|---|---|---|---|---|---|---|---|---|
| 7/3/20 Before | 12.43 | 111.36 | 171.05 | 8.59 | (89.42) | 229.05 | 31.94 | 103.33 | |
| 7/3/20 After | 15.04 | 134.71 | 206.92 | 8.15 | (64.47) | (145.44) | 20.75 | 94.92 | |
| | | | | | | | | | |

| ELEMENT | | | | | | SAMPLE | Open Loop-Before | | Open Loop-After |
|---|---|---|---|---|---|---|---|---|---|
| Sampling Date | | | | | | | 2020-07-01 | | 2020-07-01 |
| SO₄, sulphate | | | | | | mg/L | 1750 | | 43.1 |
| Sulphite as SO₃²⁻ | | | | | | mg/L | 5.9 | | <5.0 |
| Naphtalene | | | | | | µg/L | 0.485 | | <0.030 |
| Fluorene µg/L | | | | | | µg/L | 0.022 | | 0.024 |
| Phenantrene | | | | | | µg/L | 0.026 | | <0.020 |
| Sum PAH 16 | | | | | | µg/L | 0.533 | | 0.024 |
| Sum carcinogen PAH | | | | | | µg/L | <0.035 | | <0.035 |
| Sum other PAH | | | | | | µg/L | 0.533 | | 0.024 |
| Sum PAH L | | | | | | µg/L | 0.485 | | <0.025 |
| Sum PAH M | | | | | | µg/L | 0.048 | | 0.024 |
| Sum PAH H | | | | | | µg/L | <0.040 | | <0.040 |
| S, sulphur | | | | | | mg/L | 686 | | 14.1 |
| nitrite as N | | | | | | mg/L | 0.0770 | | <0.0020 |
| No₃-N, nitrate as N | | | | | | mg/L | <0.060 | | 0.820 |
| Nitrite | | | | | | mg/L | 0.253 | | <0.0050 |
| NO₃, nitrate | | | | | | mg/L | <0.27 | | 3.63 |

## Claims

1. Arrangement comprising an electrolytic cell configured to produce oxygen, said cell comprising at least one planar anode (103, 206) and at least one planar cathode (102, 207), and electrical connectors (106, 108) to the at least one anode and the at least one cathode forming at least one electrode pair, wherein said at least one anode is coated with iridium oxide and/or ruthenium oxide, and wherein the distance between said at least one anode and said at least one cathode forming the at least one electrode pair is from 3 mm to 100 mm,
and wherein the electrical connectors extend through the planes of the at least one planar anode and the at least one planar cathode; and wherein said at least one planar anode and said at least one planar cathode have a mesh structure (202).

2. Arrangement according to claim 1, wherein the arrangement further comprises at least one sensor configured to measure the oxygen saturation in the vicinity of said at least one electrode pair.

3. Arrangement according to claim 1 or 2, wherein the electrolytic cell is configured to be operated at a current density ranging from 100 to 400 mA/cm².

4. Arrangement according to claim 2, wherein the at least one sensor is configured to measure the oxygen saturation (%O₂) at a distance from 1 to 26 cm from said at least one electrode pair.

5. Arrangement according to any one of claims 1 to 4, wherein said at least one planar cathode is a non-coated titanium substrate.

6. Arrangement according to any one of claims 1 to 5, wherein the arrangement comprises a housing (101) enclosing the electrolytic cell, said housing having at least one inlet (104) and at least one outlet (105) for water.

7. Arrangement according to any one of claims 1 to 6, wherein said at least one planar anode and said at least one planar cathode are concentrically shaped.

8. Arrangement according to any one of claims 1 to 7, wherein the distance between said at least one planar anode and said at least one planar cathode is from 3 to 50 mm.

9. Process for treating a body of water by means of the arrangement defined in any one of claims 1 to 8, wherein the body of water before treatment has a total dissolved solids (TDS) content ranging from 100 to 30000 ppm or a conductivity ranging from 5.5µS/m to 5S/m.

10. Process according to claim 9, wherein the electrolytic cell is operated at a current density ranging from 100 to 400 mA/cm².

11. Process according to claim 9 or 10, wherein a voltage ranging from 1.5 to 50 V is applied over the electrolytic cell.

12. Process according to any one of claims 9 to 11, wherein the body of water before starting the process contains hydrocarbons selected from poly aromatic hydrocarbons or hydrocarbons present or originating from fuel oils in an amount ranging from 1 ug/L to 100 mg/L water.

13. Process according to any one of claims 9 to 12, wherein the body of water before starting the process contains per-and polyfluoroalkyl substances, (PFAS) in an amount ranging from 1 µg/L to 100 mg/L water.

14. Process according to any one of claims 9 to 12, wherein sodium chloride is added to the process in an amount of 10 to 100 kg/m3 water for generation of chlorine or chlorine species for municipal drinking water.

15. Use of an arrangement according to any one of claims 1 to 8 for treating a body of water having a TDS (total dissolved solids) content ranging from 100 to 30000 ppm.

16. Use according to claim 15, wherein the body of water has a TDS (total dissolved solids) content ranging from 100 to 1000 ppm.

## Patentansprüche

1. Vorrichtung enthaltend eine elektrolytische Zelle, die so konfiguriert ist, dass sie Sauerstoff produziert,
wobei die Zelle mindestens eine planare Anode (103, 206) und mindestens eine planare Kathode (102, 207) und elektrische Verbindungen (106, 108) zu der mindestens einen Anode und der mindestens einen Kathode, die mindestens ein Elektrodenpaar bilden, umfasst,
wobei die mindestens eine Anode mit Iridiumoxid und/oder Rutheniumoxid beschichtet ist und wobei der Abstand zwischen der mindestens einen Anode und der mindestens einen Kathode, die das mindestens eine Elektrodenpaar bilden, zwischen 3 mm und 100 mm liegt,
und wobei sich die elektrischen Verbindungen durch die Ebene der mindestens einen planaren Anode und der mindestens einen planaren Kathode erstrecken, und wobei die mindestens eine planare Anode und die mindestens eine planare Kathode eine Netz-Struktur (202) aufweisen.

2. Vorrichtung nach Anspruch 1, wobei die Vorrichtung zudem mindestens einen Sensor umfasst, der konfiguriert ist, dass er die Sauerstoffsättigung in der Umgebung des mindestens einen Elektrodenpaars misst.

3. Vorrichtung nach Anspruch 1 oder 2, wobei die elektrolytische Zelle so konfiguriert ist, dass sie bei einer Stromdichte im Bereich von 100 bis 400 mA/cm² eingesetzt werden kann.

4. Vorrichtung nach Anspruch 2, wobei der mindestens eine Sensor so konfiguriert ist, dass er die Sauerstoffsättigung (%O₂) bei einer Entfernung von 1 bis 26 cm von dem mindestens einen Elektrodenpaar misst.

5. Vorrichtung nach einem der Ansprüche 1 bis 4, wobei die mindestens eine planare Kathode ein nicht-beschichtetes Titansubstrat ist.

6. Vorrichtung nach einem der Ansprüche 1 bis 5, wobei die Vorrichtung ein Gehäuse (101) umfasst, das die elektrolytische Zelle umschließt, wobei das Gehäuse mindestens einen Einlass (104) und mindestens einen Auslass (105) für Wasser aufweist.

7. Vorrichtung nach einem der Ansprüche 1 bis 6, wobei die mindestens eine planare Anode und die mindestens eine planare Kathode konzentrisch geformt sind.

8. Vorrichtung nach einem der Ansprüche 1 bis 7, wobei der Abstand zwischen der mindestens einen planaren Anode und der mindestens einen planaren Kathode 3 bis 50 mm beträgt.

9. Verfahren zum Behandeln eines Volumens an Wasser, mittels der Vorrichtung wie in einem der Ansprüche 1 bis 8 definiert, wobei das Volumen an Wasser vor der Behandlung eine Gesamtmenge an gelösten Feststoffen (total dissolved solids, TDS) im Bereich von 100 bis 30000 ppm oder eine Leitfähigkeit im Bereich von 5,5µS/m bis 5S/m aufweist.

10. Verfahren nach Anspruch 9, wobei die elektrolytische Zelle bei einer Stromdichte im Bereich von 100 bis 400 mA/cm² eingesetzt wird.

11. Verfahren nach Anspruch 9 oder 10, wobei an die elektrolytische Zelle eine Spannung im Bereich von 1,5 bis 50 V angelegt ist.

12. Verfahren nach einem der Ansprüche 9 bis 11, wobei das Volumen an Wasser vor Start des Verfahrens Kohlenwasserstoffe ausgewählt aus polyaromatischen Kohlenwasserstoffen oder Kohlenwasserstoffen, die in Heizöl vorhanden sind oder daraus stammen, in einer Menge im Bereich von 1 µg/L bis 100 mg/L Wasser enthält.

13. Verfahren nach einem der Ansprüche 9 bis 12, wobei das Volumen an Wasser vor Start des Verfahrens per- und polyfluorierte Chemikalien (PFAS) in einer Menge im Bereich von 1 µg/L bis 100 mg/L Wasser enthält.

14. Verfahren nach einem der Ansprüche 9 bis 12, wobei dem Verfahren Natriumchlorid in einer Menge von 10 bis 100 kg/m³ Wasser zur Herstellung von Chlor oder Chlorverbindungen für städtisches Trinkwasser zugesetzt wird.

15. Verwendung einer Vorrichtung nach einem der Ansprüche 1 bis 8 zur Behandlung eines Volumens an Wasser mit einer Gesamtmenge an gelösten Feststoffen (total dissolved solids, TDS) im Bereich von 100 bis 30000 ppm.

16. Verwendung nach Anspruch 15, wobei das Volumen an Wasser eine Gesamtmenge an gelösten Feststoffen (total dissolved solids, TDS) im Bereich von 100 bis 1000 ppm aufweist.

## Revendications

1. Dispositif comprenant une cellule électrolytique configurée pour produire de l'oxygène,
ladite cellule comprenant au moins une anode plane (103, 206) et au moins une cathode plane (102, 207) et des connecteurs électriques (106, 108) vers ladite au moins une anode et vers ladite au moins une cathode formant au moins une paire d'électrodes,
dans lequel ladite au moins une anode est revêtue d'oxyde d'iridium et/ou d'oxyde de ruthénium, et dans lequel la distance entre ladite au moins une anode et ladite au moins une cathode formant ladite au moins une paire d'électrodes est comprise entre 3 mm et 100 mm,
et dans lequel les connecteurs électriques s'étendent à travers les plans de ladite au moins une anode plane et de ladite au moins une cathode plane, et dans lequel ladite au moins une anode plane et ladite au moins une cathode plane présentent une structure maillée (202).

2. Dispositif selon la revendication 1, dans lequel le dispositif comprend en outre au moins un capteur configuré pour mesurer la saturation en oxygène dans les environs de ladite au moins une paire d'électrodes.

3. Dispositif selon la revendication 1 ou 2, dans lequel la cellule électrolytique est configurée pour le faire fonctionner à une densité de courant comprise entre 100 et 400 mA/cm².

4. Dispositif selon la revendication 2, dans lequel ledit au moins un capteur est configuré pour mesurer la saturation en oxygène (%O₂) à une distance de 1 à 26 cm de ladite au moins une paire d'électrodes.

5. Dispositif selon l'une quelconque des revendications 1 à 4, dans lequel ladite au moins une cathode plane est un substrat en titane non revêtu.

6. Dispositif selon l'une quelconque des revendications 1 à 5, dans lequel le dispositif comprend un boîtier (101) entourant la cellule électrolytique, ledit boîtier comprenant au moins une entrée (104) et au moins une sortie (105) pour de l'eau.

7. Dispositif selon l'une quelconque des revendications 1 à 6, dans lequel ladite au moins une anode plane et ladite au moins une cathode plane sont formées de façon concentrique.

8. Dispositif selon l'une quelconque des revendications 1 à 7, dans lequel la distance entre ladite au moins une anode plane et ladite au moins une cathode plane est comprise entre 3 et 50 mm.

9. Procédé de traitement d'un volume d'eau au moyen du dispositif tel que défini selon l'une quelconque des revendications 1 à 8, dans lequel le volume d'eau avant traitement présente une teneur en matières solides dissoutes totales (TDS) comprise entre 100 et 30.000 ppm ou une conductivité comprise entre 5,5 µS/m et 5 S/m.

10. Procédé selon la revendication 9, dans lequel on fait fonctionner la cellule électrolytique à une densité de courant comprise entre 100 et 400 mA/cm².

11. Procédé selon la revendication 9 ou 10, dans lequel une tension comprise entre 1,5 et 50 V est appliquée à la cellule électrolytique.

12. Procédé selon l'une quelconque des revendications 9 à 11, dans lequel, avant le démarrage du procédé, le volume d'eau contient des hydrocarbures choisis parmi les hydrocarbures polyaromatiques ou les hydrocarbures présents ou provenant de fiouls, en une quantité comprise entre 1 µg/L et 100 mg/L d'eau.

13. Procédé selon l'une quelconque des revendications 9 à 12, dans lequel, avant le démarrage du procédé, le volume d'eau contient des substances perfluoroalkylées et polyfluoroalkylées (PFAS) en une quantité comprise entre 1 µg/L et 100 mg/L d'eau.

14. Procédé selon l'une quelconque des revendications 9 à 12, dans lequel du chlorure de sodium est ajouté au procédé en une quantité de 10 à 100 kg/m³ d'eau pour la production de chlore ou d'espèces chlorées pour de l'eau potable municipale.

15. Utilisation d'un dispositif selon l'une quelconque des revendications 1 à 8, pour traiter un volume d'eau dont la teneur en TDS (matières solides dissoutes totales) est comprise entre 100 et 30.000 ppm.

16. Utilisation selon la revendication 15, dans laquelle le volume d'eau présente une teneur en TDS (matières solides dissoutes totales) comprise entre 100 et 1.000 ppm.
